# EUROPEAN PATENT APPLICATION

(11) **EP 2 511 818 A2**
(43) Date of publication of application: **17.10.2012**
(21) Application number: 12162384.7
(22) Date of filing: 30.03.2012
(51) Int. Cl.: G06F 9/44, H04N 21/485

(54) **Display apparatus and control method thereof**

(30) Priority: 12.04.2011 KR 20110033628; 17.11.2011 KR 20110120036
(71) Applicant: Samsung Electronics Co., Ltd., Suwon-si, Gyeonggi-do, 443-742 (KR)
(72) Inventor: Lee, Hee-ran, Gyeonggi-do (KR); Choi, Sung-wook, Seoul (KR); Lee, Jeong-soo, Gyeonggi-do (KR); Song, In-jee, Gyeonggi-do (KR); Shin, Seung-min, Gyeonggi-do (KR); Lee, Hye-jeong, Seoul (KR); Yoo, Seung-yeol, Gyeonggi-do (KR)
(74) Representative: Hewett, Jonathan Michael Richard

(57) **Abstract**

Provided are a display apparatus and a control method thereof. The display apparatus includes: a display unit; a video processor which processes an image for display on the display unit; a storage unit which stores status information related to at least one of a structure and a function of the display apparatus, and a plurality of manual information corresponding to a plurality of processes implementable in the display apparatus; and a controller which, when a process, among the plurality of processes, is performed, controls the video processor to display manual information corresponding to the process on the basis of a current status information of the display apparatus.

## Description

The present invention relates to a display apparatus displaying an image based on a video signal and a control method thereof, and more particularly to a display apparatus configured to offer an explanation about a structure and a function of the apparatus or setting methods for a user.

A display apparatus processes a video signal received from an external video source, and displays the processed video signal as an image on a display panel achieved, for example, by a liquid crystal or the like. The display apparatus provided to a general user is achieved by a television (TV), a monitor, etc. For example, the display apparatus for the TV provides an image of a broadcasting channel desired by a user by applying various processes such as tuning, decoding, etc., to a broadcasting signal received from an exterior.

With development of technology and increase of contents, such a display apparatus uses a relatively developed data processing speed and capacity to perform and provide more complicated functions beyond a level of simply providing video contents. For example, functions for terminal or hub for home networking, communication with an external network, drive of various kinds of application, etc., may be implemented in the display apparatus. However, the more complicated the functions, the more complicated a use thereof. Therefore, it may be difficult for a user to get an explanation and an operational method about his/her desired function among the functions supported by the display apparatus.

According to an aspect of an exemplary embodiment of the present invention there is provided a display apparatus including: a display unit; a video processor which processes an image for display on the display unit; a storage unit which stores status information related to at least one of a structure and a function of the display apparatus, and manual information corresponding to a plurality of processes implementable in the display apparatus; and a controller which, when a process is performed among the plurality of processes, controls the video processor to display manual information corresponding to the first process on the basis of a current status information of the display apparatus.

The status information may include a plurality of preset operation mode information of the display apparatus, and the controller may select the manual information of the process corresponding to the current operation mode of the display apparatus from the storage unit.

The storage unit may previously store use pattern information of a user with respect to the at least one of the structure and the function of the display apparatus, and the control may select the manual information of the process on the basis of the status information and the use pattern information.

The use pattern information may include at least one of a user's profile information, preference for contents, and contents viewing records.

The display apparatus may further include an interface unit to receive data from an exterior, wherein the controller selects the manual information corresponding to a predetermined keyword on the basis of the status information when the process for receiving the predetermined keyword through the interface unit is implemented.

The storage unit may store keyword groups into which a plurality of keywords are classified on the basis of meanings of the plurality of keywords, and a plurality of index keywords respectively corresponding to the plurality of keyword groups, and the controller may select the keyword group and the index keyword corresponding to the predetermined keyword received through the interface unit, and search the manual information corresponding to the selected index keyword.

The manual information may include at least one of a profile about the at least one of the structure and the function of the display apparatus, and a guide to a method of controlling the status of the display apparatus.

The display apparatus may further include an interface unit to communicate with a server, wherein the controller transmits the current status information of the display apparatus to the server through the interface unit, and displays recommended setup information so that the status of the display apparatus can be set up on the basis of the recommended setup information if receiving the recommended setup information corresponding to the status information from the server.

The storage unit may store therein use pattern information of a user for the display apparatus, and the controller may determine the recommended service based on the use pattern information of the user and status information stored in the storage unit and display on the display unit a UI image for a user to select the recommended service as determined, upon receiving a request for providing the recommended service for a user.

The storage unit may store therein a plurality of user profiles and use pattern information corresponding to each of the user profiles, and the controller may read use pattern information of a user profile corresponding to the user ID information upon further receiving the user ID information.

According to an aspect of another exemplary embodiment, there is provided a control method of a display apparatus, the method including: implementing a process among a plurality of processes implementable in the display apparatus; and displaying previously stored status information related to at least one of a structure and a function of the display apparatus, and manual information corresponding to the process on the basis of a current status information of the display apparatus.

The status information may include a plurality of preset operation mode information of the display apparatus, and the displaying the manual information may include selecting the manual information of the process corresponding to the current operation mode of the display apparatus from the storage unit.

Use pattern information of a user with respect to the at least one of the structure and the function of the display apparatus may be previously stored, and the displaying the manual information may include selecting the manual information of the process on the basis of the status information and the use pattern information.

The use pattern information may include at least one of a user's profile information, preference for contents, and contents viewing records.

The implementing the process may include receiving a predetermined keyword from an exterior, and the displaying the manual information may include selecting the manual information corresponding to the predetermined keyword on the basis of the status information.

Keyword groups into which a plurality of keywords are classified on the basis of meanings of the plurality of keywords, and a plurality of index keywords respectively corresponding to the plurality of keyword groups may be previously stored, and the selecting the manual information may include: selecting the keyword group and the index keyword corresponding to the predetermined keyword; and searching the manual information corresponding to the selected index keyword.

The manual information may include at least one of a profile about the at least one of the structure and the function of the display apparatus, and a guide to a method of controlling the status of the display apparatus.

The implementing the first process may include: transmitting the status information of the display apparatus to the server; and receiving recommended setup information corresponding to the status information from the server, and the displaying the manual information may include displaying the recommended setup information so that the status of the display apparatus can be set up on the basis of the recommended setup information.

The displaying the manual information may include: receiving a request for providing a recommended service for a user; and determining the recommended service based on the stored use pattern information of a user and the status information for the display apparatus, and displaying a UI image for a user to select the recommended service as determined.

The use pattern information may be individually stored to correspond to each of a plurality of user profiles; and the receiving the request for providing the recommended service for a user may include receiving user ID information, and reading use pattern information of a user profile corresponding to the received ID information.

According to an aspect of another exemplary embodiment, there is provided a control method of an image processing apparatus, the method including: implementing a process; and outputting manual information corresponding to the process according to a current status information, wherein the manual information is among a plurality of manual information corresponding to a plurality of processes.

According to an aspect of another exemplary embodiment, there is provided an image processing apparatus including: a video processor which processes an image for output; and a controller which, when a process, among a plurality of processes, is performed, controls the video processor to output manual information corresponding to the process according to a current status information, wherein the manual information is among a plurality of manual information corresponding to the plurality of processes.

According to an aspect of another exemplary embodiment, there is provided a computer readable recording medium having recorded thereon a program executable by a computer for performing the method including: implementing a process among a plurality of processes implementable in the display apparatus which stores status information related to at least one of a structure and a function of the display apparatus; and displaying manual information corresponding to the process according to a current status information of the display apparatus, wherein the manual information is among a plurality of manual information corresponding to the plurality of processes.

The method may include: implementing a process; and outputting manual information corresponding to the process according to a current status information, wherein the manual information may be among a plurality of manual information corresponding to a plurality of processes.

The current status information may relate to at least one of a structure and a function of the image processing apparatus or at least one of a structure and a function of a display apparatus that displays the manual information.

The image processing apparatus may store status information including a plurality of preset operation mode information of at least one of the image processing apparatus and a display apparatus that displays the manual information; and the outputting the manual information may include selecting the manual information of the process corresponding to a current operation mode, among the plurality of preset operation mode information.

A use pattern information of a user may be previously stored; and the outputting the manual information may include selecting the manual information of the process according to the current status information and the use pattern information.

The implementing the process may include receiving a predetermined keyword from an exterior; and the outputting the manual information may include selecting manual information corresponding to the predetermined keyword according to the current status information.

The manual information may include at least one of a profile about at least one of a structure and a function of the image processing apparatus or a structure and a function of display apparatus that displays the manual information, and a guide to a method of controlling a status of the image processing apparatus or the display apparatus.

The outputting the manual information may include: receiving a request for providing a recommended service for a user; and determining the recommended service based on stored use pattern information of the user and the current status information, and outputting a user interface (UI) image for the user to select the determined recommended service.

According to an aspect of another exemplary embodiment, there is provided a computer readable recording medium having recorded thereon a program executable by a computer for performing a method, the method including: implementing a process; and outputting manual information corresponding to the process according to a current status information, wherein the manual information is among a plurality of manual information corresponding to a plurality of processes.

According to an aspect of another exemplary embodiment there is provided an image processing apparatus including: a video processor which processes an image for output; and a controller which, when a process, among a plurality of processes, is performed, controls the video processor to output manual information corresponding to the process according to a current status information, wherein the manual information is among a plurality of manual information corresponding to the plurality of processes.

The above and/or other aspects will become apparent and more readily appreciated from the following description of exemplary embodiments, taken in conjunction with the accompanying drawings, in which:
FIG. 1 is a block diagram of a display apparatus according to a first exemplary embodiment;
FIG. 2 is a conceptual diagram showing a process of searching a database on the basis of a keyword in the display apparatus of FIG. 1;
FIG. 3 shows an example of a UI image and a manual image in the display apparatus of
FIG. 1;

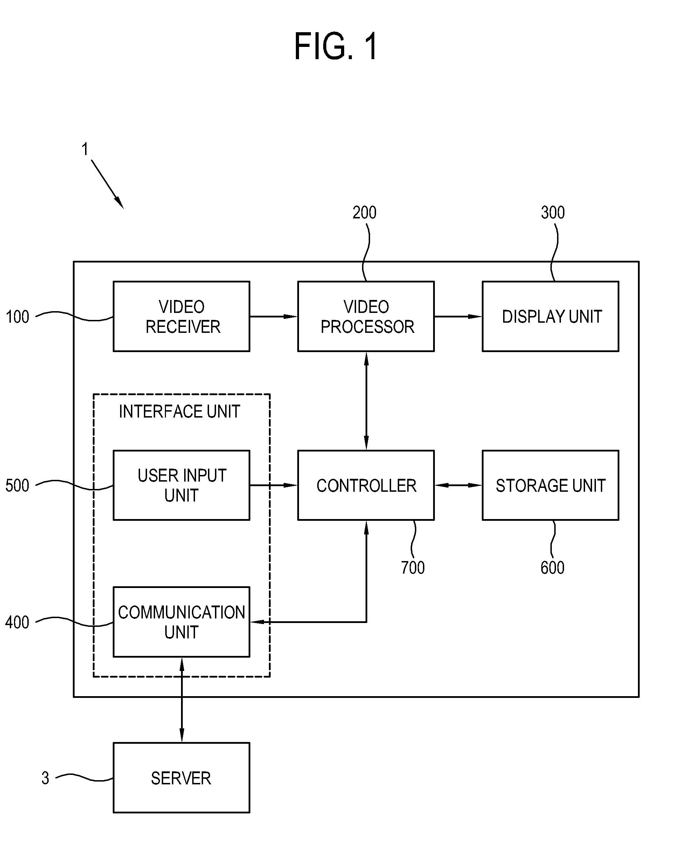

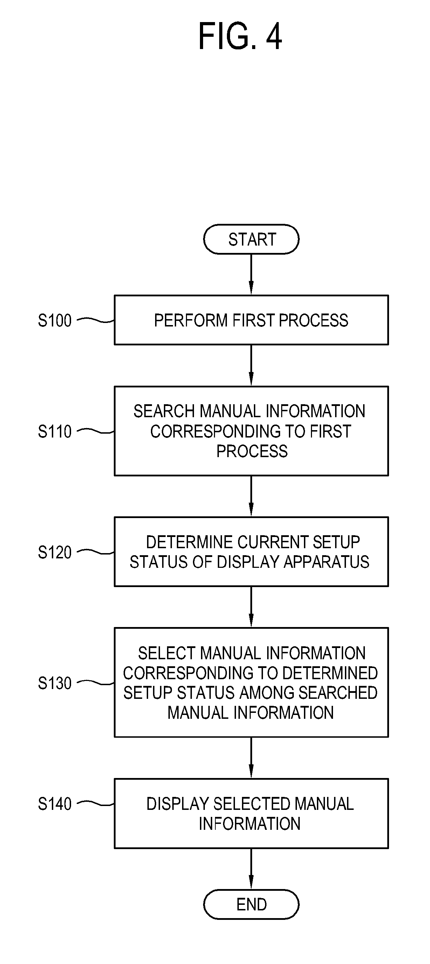

FIG. 4 is a control flowchart showing a control method of the display apparatus of FIG. 1;

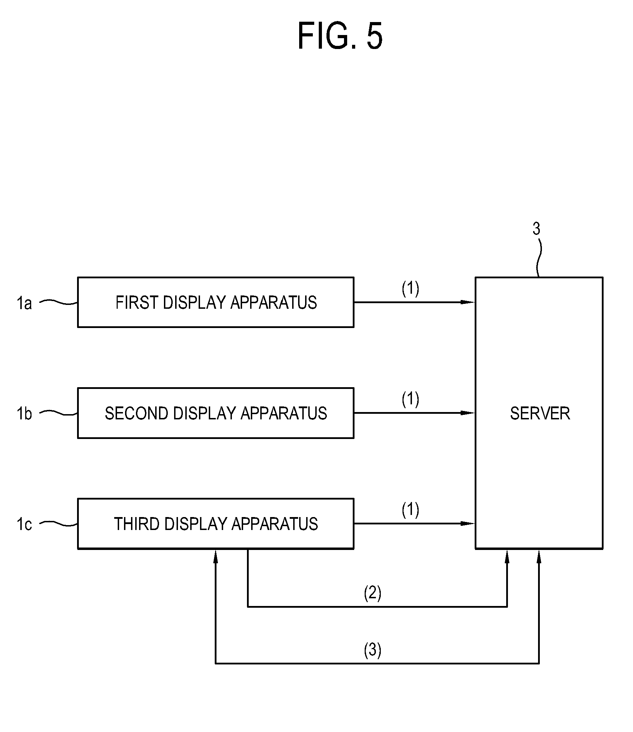

FIG. 5 is a conceptual diagram of signal transmission/reception between a server and a display apparatus according to a second exemplary embodiment;

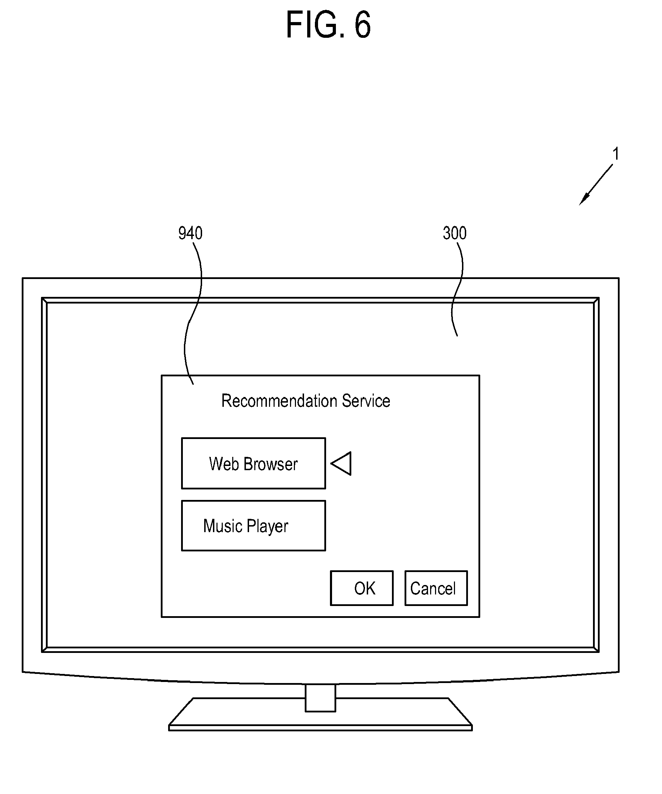

FIG. 6 illustrates an example of displaying a UI image in a display apparatus according to a third exemplary embodiment of the present invention; and

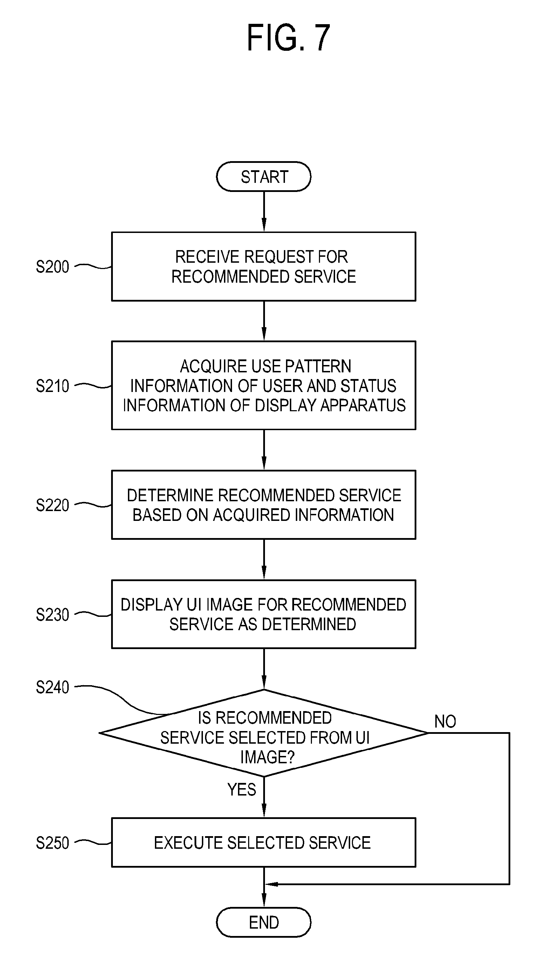

FIG. 7 is a control flowchart of a control method of the display apparatus in FIG. 6.

Below, exemplary embodiments will be described in detail with reference to accompanying drawings. Exemplary embodiments will be described regarding elements that directly relate to the present invention, and descriptions of other elements will be omitted. However, it does not mean that the elements whose descriptions are omitted are unnecessary for embodying an apparatus or a system according to the present invention.

FIG. 1 is a block diagram of a display apparatus 1 according to a first exemplary embodiment.

As shown in FIG. 1, the display apparatus 1 includes a video receiver 100 to receive a video signal from an external video source (not shown), a video processor 200 to process a video signal received in the video receiver 100 to be displayed as an image, a display unit 300 to display an image processed by the video processor 200, an interface unit 400, 500 to communicate with an exterior and transmit/receive a signal/data/information or the like, a storage unit 600 to store the signal/data/information or the like, and a controller 700 to control operation of general configuration of the display apparatus 1. While the present exemplary embodiment is described with reference to a display apparatus 1 including a display unit 300, it is understood that another exemplary embodiment is not limited thereto. For example, another exemplary embodiment may be applied to an image processing apparatus (such as a set-top box) that does not include a display unit 300.

The video receiver 100 receives a video signal through a wire or wirelessly and transmits the received video signal to the video processor 200. The video receiver 100 may be achieved by various forms in accordance with a format of a received video signal or a type of the display apparatus 1. If a video signal is a broadcasting signal, the video receiver 100 includes a tuner to be tuned to a channel corresponding to the broadcasting signal.

For example, if the display apparatus 1 is a TV, the video receiver 100 may receive a radio frequency (RF) signal transmitted from a broadcasting station (not shown); a video signal complying with composite/component video, super video, Syndicat des Constructeurs des Appareils Radiorécepteurs et Téléviseurs (SCART), high definition multimedia interface (HDMI), DisplayPort, unified display interface (UDI), or wireless HD standards; etc. Also, if the display apparatus 1 is a monitor for a computer, the video receiver 100 may comply with D-SUB capable of transmitting an RGB signal based on VGA; digital video interactive (DVI) standards such as DVI- analog (A), DVI-integrated digital/analog (I) and DVI- digital (D); HDMI standards; etc.

The video processor 200 performs various video processes with respect to a video signal. The video processor 200 performs such processes and outputs a video signal to the display unit 300, thereby allowing an image to be displayed on the display unit 300.

The kinds of video processes performed by the video processor 200 are not limited, and may for example include decoding and encoding corresponding to various video formats, de-interlacing, frame refresh rate conversion, scaling, noise reduction for improving picture quality, detail enhancement, etc. The video processor 200 may be achieved by individual configurations where respective processes are independently performed, or an integrated configuration where many functions are integrated.

The display unit 300 displays an image based on a video signal output from the video processor 200. The display unit 300 may be achieved by liquid crystal, plasma, light-emitting diode, organic light-emitting diode, surface-conduction electron-emitter, carbon nano-tube, nano-crystal, etc., but is not limited thereto.

The interface unit 400, 500 allows the display apparatus 1 to transmit, receive, and/or exchange signal/data/information with regard to a user's operation or an external network. The interface unit 400, 500 includes a communication unit 400 having an access to and communicating with a server 3 through a predetermined protocol-based network, and a user input unit 500 operated by a user to output predetermined information or a preset command corresponding to the user's operation to the controller 700.

The communication unit 400 performs interactive communication so that the controller 700 can transmit and receive predetermined data to and from the server 3. Under control of the controller 700, the communication unit 400 transmits data stored in the storage unit 600 to the server 3, or transmits data received from the server 3 to the controller 700. There is no limit to how the communication unit 400 accesses the server 3, and various wired and/or wireless protocols may be applicable.

The user input unit 500 transmits preset various control commands or predetermined character strings to the controller 700 in accordance with a user's operation or input. The controller 700 performs a process corresponding to a characteristic of a relevant signal in accordance with a signal transmitted from the user input unit 500. The user input unit 500 may be achieved by a menu key and an input panel arranged in an outside of the display apparatus 1, a remote controller remotely separated from the display apparatus 1, etc.

The storage unit 600 includes a readable/writable non-volatile memory such as a flash memory or a hard disk drive. The storage unit 600 is accessible by the controller 700, so that the controller 700 can perform searching, reading, writing, modifying, etc., with regard to the stored data.

With this configuration, according to an exemplary embodiment, the storage unit 600 stores status information about the structure and function of the display apparatus 1, and a database of manual information corresponding to a plurality of preset processes to be implemented in the display apparatus 1. Further, the controller 700 searches the manual information corresponding to a first process from the database of the storage unit 600 on the basis of the status information of the display apparatus 1 at the point in time when the first process is implemented among the processes, and controls the searched manual information to be displayed.

Thus, with regard to a function desired by a user, an explanation about the corresponding function can be readily offered to a user to easily set up the status of the corresponding function.

Here, the status information includes a variety of information corresponding to a status related to the structure and function of the display apparatus 1. For example, the status information may include items, of which settings can be changed by a user, for example, selection of video signal sources (not shown) to be processed by the video processor 200 or adjustment for quality of an image displayed on the display unit 300; and items of which settings cannot be changed by a user, for example, a communication status of when the display apparatus 1 is connected to the communication network, in the structure/function of the display apparatus 1.

Also, the structure and the function of the display apparatus 1 include specifications of hardware and software constituting the display apparatus 1, and a relationship therebetween.

As an example of the status information, the display apparatus 1 may have one of a first mode to receive a broadcasting signal from a broadcasting station, a second mode to locally receive a video signal from a digital versatile disc (DVD)/Blu-ray (BD) player (not shown), and a third mode to read video data stored in built-in memory (not shown) in accordance with acquirement types of the video signal for displaying an image on the display unit 300.

If a user wants to execute the first process for changing a reproducing speed of an image displayed on the display unit 300, a method of changing the reproducing speed of an image may be varied depending on which one of the first mode, the second mode, and the third mode the display apparatus is in.

When an event for executing such a first process occurs, for example, when a reproducing speed changing button of the remote controller (not shown) is pressed, the controller 700 determines a current mode of the display apparatus 1, and selects the manual information of the first process corresponding to the relevant mode, thereby displaying the selected manual information.

In addition to the status information, the storage unit 600 may store use pattern information of a user about the structure/function of the display apparatus 1. A user's use pattern may include use history information of the display apparatus, e.g., a user's profile such as personal data, a user's preference for video contents, records of video contents viewed by a user, etc. The use pattern information may be directly input by a user through the user input unit 500 or generated as the controller 700 collects use records during a preset period of time. The use pattern information may be varied in a stage of designing the apparatus.

According to the present exemplary embodiment, the first process may include a user's operation for inputting a predetermined keyword through the user input unit 500. That is, if a predetermined keyword is received through the user input unit 500, the controller 700 selects and displays the manual information corresponding to the relevant keyword on the basis of the status information. When the manual information for the corresponding keyword is selected, selection is possible on the basis of the status information and the use pattern information of the display apparatus 1.

Also, the controller 700 may display the manual information and a user interface (UI) image for adjusting a setting status of the display apparatus 1 in accordance with the corresponding keyword.

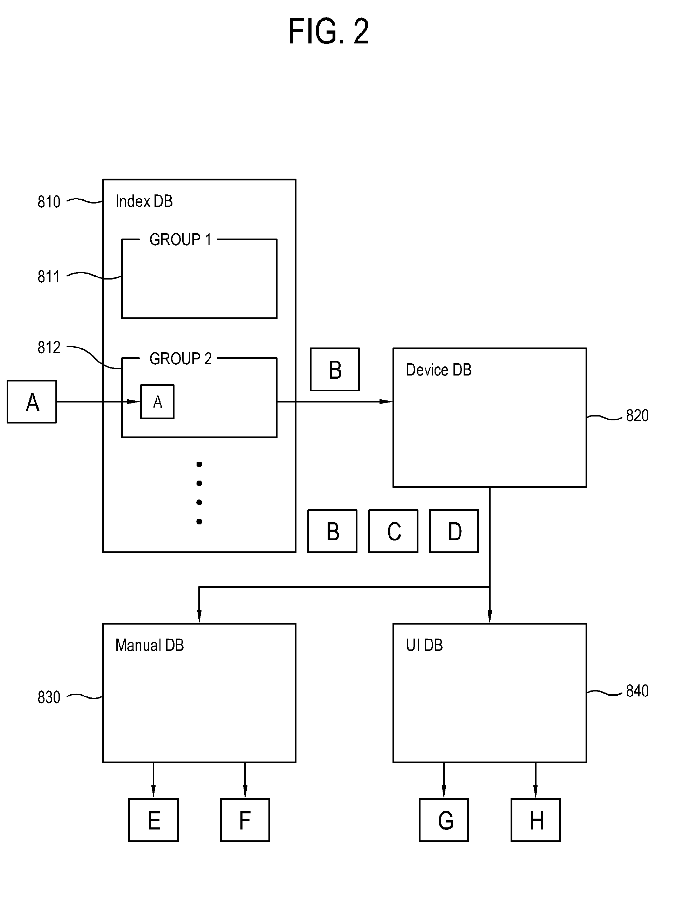

Below, a process of searching a database stored in the storage unit 600 on the basis of a keyword input through the user input unit 500 will be described with reference to FIG. 2. FIG. 2 is a conceptual diagram showing a process of searching databases 810, 820, 830, 840 on the basis of a keyword in the display apparatus 1.

In the following exemplary embodiment, both a manual image and a UI image are displayed in accordance with an input keyword, though it is understood that another exemplary embodiment is not limited thereto. Alternatively, for example, only the manual image may be displayed from among the manual image and the UI image.

As shown in FIG. 2, the storage unit 600 includes an index database (DB) 810, a device DB 820, a manual DB 830, and a UI DB 840. It is understood that there is no limit to the information contained in the databases, and the information may include a text, an image, a moving picture, etc.

In the index DB 810, a plurality of keywords is classified into a plurality of keyword groups 811 and 812 on the basis of their meaning and contents, and an index keyword is set up to correspond to one keyword group 811, 812. For example, "sound," "noise," "voice," "volume," or the like keyword is classified into one keyword group 811, 812, and the index keyword of the corresponding keyword group 811, 812 may be set as "volume."

In the device DB 820, the current status information about the display apparatus's own structure and function is stored. According to one or more exemplary embodiments, the device DB 820 may further store a user's use pattern information. For example, the device DB 820 may contain a user's personal data, preference based on contents viewing records during a preset period of time, states of hardware/software of the display apparatus 1, or the like information about the display apparatus 1.

The manual DB 830 contains information corresponding to the index keyword, for example, a profile about the structure and function of the display apparatus 1 or a guide manual about a method of changing settings about the status of the display apparatus 1. Also, in association with the UI DB 840, the manual DB 830 may contain a guide manual for explaining UI settings defined in the UI DB 840. That is, the manual DB 830 is linked to information contained in each of the device DB 820 and the UI DB 840 so as to have a relationship therebetween.

The UI DB 840 contains UI settings corresponding to an index keyword. The UI settings are referred to by the video processor 200 so that the UI image can be generated in accordance with the corresponding UI settings.

Such a configuration of the database may be established on the basis of an ontology-based knowledge modeling system. The ontology is formal and explicit specifications about shared conceptualization, which includes records of the database and relationships between the records. In the ontology-based database, records or words related to a certain domain are hierarchically configured, and inference rules are additionally contained for extending the records or words. The ontology is the most centered concept in web application, which enables an information search on the basis of a meaning inference of a keyword when searching the database.

With this configuration of the database of the storage unit 600, the controller 700 searches which one of the keyword groups 811 and 812 of the index DB 810 corresponds to a keyword A, and selects an index keyword B corresponding to the keyword group 812 relevant to the keyword A. Such a process enables the controller 700 to perform searching based on the meaning or contents of the keyword A.

The controller 700 searches items, e.g., C and D about the current status information of the display apparatus 1 relevant to the index keyword B in the device DB 820.

The controller 700 searches the items corresponding to the index keyword B from the manual DB 830 and the UI DB 840, and selects the items related to C and D among the searched items. In accordance with preset conditions, the controller 700 may perform searching with regard to both the manual DB 830 and the UI DB 840, or only one of the manual DB 830 and the UI DB 840. If the items E and F are searched from the manual DB 830 and the items G and H are searched from the UI DB 840, the controller 700 transmits these items to the video processor 200.

If the use pattern information of the device DB 820 is further referred, the controller 700 searches the status information item and the use pattern information item of the display apparatus 1 related to the index keyword B from the device DB 820, and searches a corresponding item from the manual DB 830 and the UI DB 840 in accordance with the above search results.

Here, the keyword A may be a simple word or a compound word. If the keyword A is the compound word where a plurality of words are compounded, the keyword A is divided into respective words and searched in the index DB 810. If the plurality of index keywords are drawn, information respectively corresponding to the plurality of index keywords may be drawn from the device DB 820 or a super ordinate concept of information respectively corresponding to the plurality of index keywords or third information containing these information may be drawn from the device DB 820.

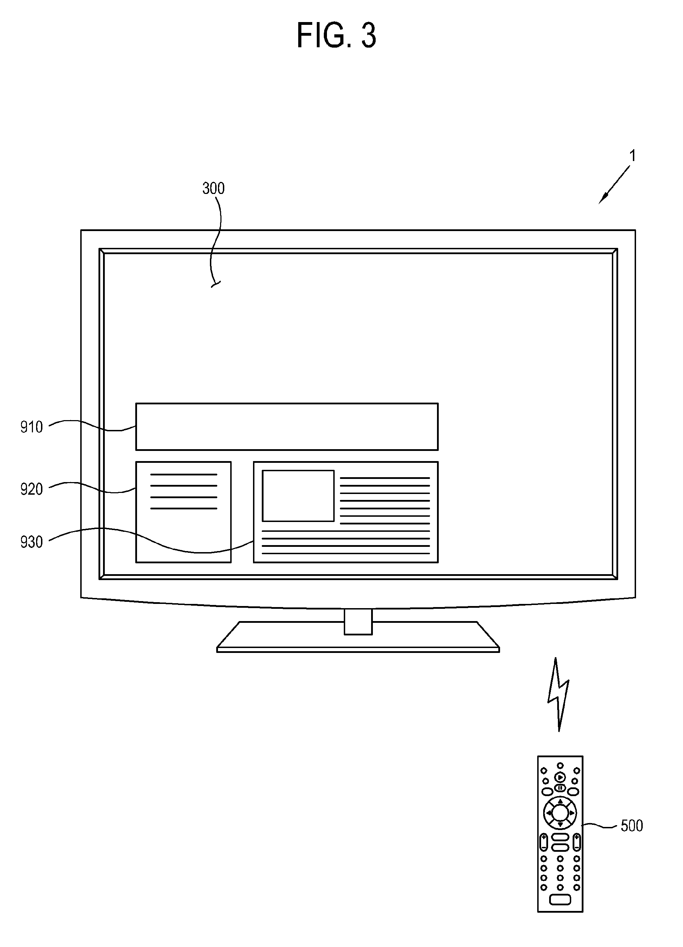

The video processor 200 displays manual images 920 and 930 and a UI image 910 on the display unit 300 as shown in FIG. 3 on the basis of the items received from the controller 700. FIG. 3 shows an example of a UI image 910 and manual images 920 and 930 in the display apparatus 1.

For example, it is assumed that a user inputs a keyword "adult contents" through the user input unit 500. In this case, as mentioned in the above-described exemplary embodiment with reference to FIG. 2, the controller 700 displays the UI image 910, the manual image 920 for explaining the adult contents, and the manual image 930 for explaining an operation method of the UI image 910 on the display unit 300 in accordance with searching results from the device DB 820, the UI DB 840 and the manual DB 830.

In more detail, the controller 700 can acquire the status information showing that the programs currently providable by the display apparatus 1 contain the adult contents, and the use pattern information about a user's age from the device DB 820 with regard to "adult contents".

The controller 700 determines whether the display apparatus 1 can currently provide the adult contents on the basis of the status information, and selects manual information items that vary according to determination results.

If it is determined that the display apparatus 1 can currently provide the adult contents on the basis of the status information, the controller 700 may select the different items from the manual DB 830 and the UI DB 840 with regard to respective cases that a user's age is searched as a minor and an adult on the basis of the use pattern information. For example, the controller 700 displays a warning message having an effect that "a minor cannot access adult contents" in the former case, but displays the method and UI for setting the adult contents in the latter case.

A user recognizes an explanation about the input keyword through the UI image 910 and the manual images 920 and 930 displayed as above, and then sets up the status about the related function of the display apparatus 1 through the user input unit 500.

Thus, according to an exemplary embodiment, the manual information can be searched on the basis of the keyword input by a user, and then displayed on the basis of the current status information of the display apparatus 1 among the searched manual information.

Below, a control method of the display apparatus 1 according to the present exemplary embodiment will be described with reference to FIG. 4. FIG. 4 is a control flowchart showing the control method.

If a predetermined first process is executed (operation S100), the controller 700 searches a plurality of manual information corresponding to the first process from the database stored in the storage unit 600 (operation S110).

The controller 700 determines a current status of the display apparatus 1 on the basis of the status information stored in the storage unit 600 (operation S120).

The controller 700 selects the manual information corresponding to the current status of the display apparatus 1 from among the plurality of searched manual information on the basis of the above determination results (operation S130). Then, the controller 700 displays the selected manual information on the display unit 300 (operation S140).

Meanwhile, if the display apparatus 1 is connected to the server 3, the display apparatus 1 may transmit its own status information to the server 3 and receive recommended setup information corresponding to the above status information from the server 3. Below, this case will be described as a second exemplary embodiment with reference to FIG. 5.

FIG. 5 is a conceptual diagram of signal transmission/reception between a server 3 and display apparatuses 1a, 1b and 1c according to the second exemplary embodiment.

As shown in FIG. 5, the server 3 connects and communicates with a plurality of display apparatuses 1a, 1b and 1c through a network.

Each display apparatus 1a, 1b, 1c stores its own status information, and this status information is the same as described above. That is, since each status information of the respective display apparatuses 1a, 1b and 1c reflects each status of the display apparatuses 1a, 1b and 1c that are different from one another, the status information may differ.

As shown in (1) of FIG. 5, each of the display apparatuses 1a, 1b and 1c first transmits the status information to the server 3 in response to a request from the server 3. Here, each of the display apparatuses 1a, 1b and 1c may transmit the user pattern information together with the status information to the server 3.

The server 3 collects the status information from the display apparatuses 1a, 1b and 1c, and classifies users into different groups on the basis of the collected information. For example, the server 3 may classify users into movie, drama, sports, and animation groups in accordance with preference for contents; may classify users in accordance with residential districts; or may classify users in accordance with various categories such as ages or sex.

The server 3 generates recommended setup information on the basis of statistical analysis from the status information of the groups classified as above. That is, with respect to the status of a predetermined item in the recommended setup information, the server 3 may set up the highest frequent status among the status information in the corresponding group into the status of the corresponding item.

For example, when a status of a favorite channel in a movie preference group is set up, if the setup status information in the corresponding group denotes that a certain channel such as a movie professional channel is designated many times, the recommended setup information can be generated so that the above certain channel can be designated on the basis of the statistical analysis.

If the groups are classified and the recommended setup information about the corresponding group is determined, the server 3 stores the classified groups and recommended setup information.

In this state, for example, a third display apparatus 1c may transmit at least one of the status information and the use pattern information to the server 3 as shown in (2) of FIG. 5, and request the recommended setup information corresponding to the relevant information. The server 3 determines which one of the plural groups corresponds to the status information received from the third display apparatus 1c. When the group is determined, the server 3 transmits the recommended setup information about the corresponding group to the third display apparatus 1c as shown in (3) of FIG. 5.

If the recommended setup information is received from the server 3, the third display apparatus 1c displays the received recommended setup information as an image to be selectable. Then, a user can set up the status of the third display apparatus 1c on the basis of the displayed image of the recommended setup information.

Thus, according to an exemplary embodiment, a user can easily apply the recommended setup information suitable to his/her tastes to the display apparatus 1a, 1b, 1c, and share the status information of his/her own display apparatus 1 with other users.

According to another exemplary embodiment, the controller 700 may display a UI image to provide the user with a recommended service based on use pattern information of the user with respect to the display apparatus stored in the storage unit 600. The controller 700 also refers to status information at the current time in connection with an inherent structure and function of the display apparatus 1.

The service is a service available through the display apparatus 1. For example, the service may include various functions, an adjustment of a status setup, applications provided/executed by the display apparatus 1, etc.

The use pattern information of a user includes various user history information such as setup details for functions of the display apparatus 1, user profile data, user's content viewing history, user's content viewing time, etc.

The status information at the current time of the display apparatus 1 includes various status information of the display apparatus 1 at the current time such as current time, hardware connection information between the display apparatus 1 and peripheral devices (not shown), status information on internal application execution, etc.

More specifically, upon receiving a command from the user input unit 500 regarding a user's request for a recommended service, the controller 700 reads the use pattern information of a user and the status information of the display apparatus 1 stored in the storage unit 600.

If there is a plurality of users for the display apparatus 1 and the storage unit 600 stores therein use pattern information per user profile corresponding to the plurality of users, a user transmits his/her ID information to the controller 700 through the user input unit 500. Among the plurality of user profiles stored in the storage unit 600, the controller 700 determines a user profile corresponding to the received ID information and reads the use pattern information of the determined user profile. If the ID information is not received, the controller 700 may display an image requesting an input of the ID information.

If there is only one user or one user profile for the display apparatus 1 and the use pattern information of the user is stored in the storage unit 600, the controller 700 may read the use pattern information of the user from the storage unit 600 even if additional ID information is not received.

Based on the read use pattern information of the user and the status information of the display apparatus 1, the controller 700 determines the recommended service, and displays on the display unit 300 a UI image regarding the determined recommended service.

The method of determining the recommended service based on the use pattern information of the user and status information of the display apparatus 1 read by the controller 700 may vary, including amendments, revisions and supplements thereto. For example, the controller 700 may determine the recommended service by the following method described below.

Upon occurrence of an event requesting the recommended service, the controller 700 confirms the current time. If the current time is confirmed to be 9 p.m., the controller 700 reads a user's use history information for the display apparatus 1. If the frequency of the user's use of a web browser is relatively higher at 9 p.m, the controller 700 determines whether the display apparatus 1 is able to execute the web browser, e.g., whether the display apparatus 1 is connected to a network.

If the frequency of playing a music file is high, regardless of the current time, the controller 700 determines whether a music playing application is executable or a speaker (not shown) of the display apparatus 1 is operable.

By the methods described above, the controller 700 selects the web browser and the music playing application as the recommended service. The controller 700 displays, on the display unit 300, a UI image 940 of the recommended service as selected, as shown in FIG. 6.

A user may select the recommended service from the UI image 940 as displayed to thereby execute the service by the display apparatus 1.

The method of selecting the recommend service as described above is exemplary, and it is understood that another exemplary embodiment is not limited thereto. For example, if the frequency of executing a particular application by a user among applications installed in the display apparatus 1 is higher, the controller 700 may select the application as a recommended service irrespective of the current time.

If there is a function that has not been selected by a user among various functions installed in the display apparatus 1, the controller 700 may select the function as a recommended service for introduction to a user.

If there is a function which is frequently adjusted at a particular time among functions of the display apparatus 1, the controller 700 may select the function as a recommended service and guide a user to adjust the function.

For example, if a user views news at 9 p.m. and adjusts the volume to level 17, the controller 700 may select the recommended service including the channel broadcasting the news and the function of adjusting the volume to level 17.

If the display apparatus 1 has a function corresponding to a particular time, i.e., has a nighttime mode in which a brightness level and volume level of the display apparatus 1 is adjusted at nighttime, the controller 700 may select the nighttime mode as the recommended service at nighttime.

As described above, the method of selecting the recommended service by the controller 700 may vary, including amendments, revisions and supplements thereto.

Hereinafter, a control method of the display apparatus 1 according to the present exemplary embodiment will be described with reference to FIG. 7. FIG. 7 is a control flowchart of the control method.

As shown therein, upon occurrence of an event requesting a recommended service through the user input unit 500, the controller 700 acquires the use pattern information of a user and the status information of the display apparatus 1 at the current time (operation S210).

The controller 700 determines the recommended service based on the acquired information (operation S220). The controller 700 displays a UI image for introducing the recommended service determined as above (operation S230).

If a user selects the recommended service from the UI image (operation S240), the controller 700 controls the display apparatus 1 to execute the selected service (operation S250).

As described above, the display apparatus 1 according to the present exemplary embodiment may provide the recommended service based on the user's use pattern for the display apparatus 1.

According to another exemplary embodiment, if a user requests a manual for a predetermined function through the user input unit 500, the controller 700 may display different manual images according to a user profile.

For example, the storage unit 600 stores manual information of a predetermined first function including a plurality of records. The storage unit 600 stores therein a plurality of user profiles.

Upon receiving a request for user ID information and a manual for the first function through the user input unit 500, the controller 700 confirms a user profile corresponding to the received ID information. The controller 700 selects each record within the manual information, and generates and displays a manual image according to the confirmed profile.

The method of selecting the plurality of records according to the user profile may vary. For example, the manual information for the first function includes a plurality of records based on language, and the controller 700 may form a manual image by selecting a record corresponding to a nationality or a location of the user profile.

If the manual information includes records which guide content genres per category, the controller 700 may analyze a user's genre tastes from the user profile, and preferentially arrange the record guiding a genre favored by a user in a manual image (e.g., in an upper side of the manual image).

As described above, the display apparatus 1 according to one or more exemplary embodiments may provide a manual information image corresponding to a user's taste.

While not restricted thereto, one or more exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. One or more exemplary embodiments may also be realized as a data signal embodied in a carrier wave and comprising a program readable by a computer and transmittable over the Internet. Moreover, one or more units of the display apparatus 1 can include a processor or microprocessor executing a computer program stored in a computer-readable medium.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a display unit;
a video processor which processes an image to be displayed on the display unit;
a storage unit which stores status information related to at least one of a structure and a function of the display apparatus, and a plurality of manual information corresponding to a plurality of processes implementable in the display apparatus; and
a controller which, when a first process, among the plurality of processes, is performed, controls the video processor to display manual information, among the plurality of manual information, corresponding to the first process according to a current status information of the display apparatus.

2. The display apparatus according to claim 1, wherein:
the status information comprises a plurality of preset operation mode information of the display apparatus; and
the controller selects the manual information of the first process corresponding to a current operation mode of the display apparatus, among the plurality of preset operation mode information, from the storage unit.

3. The display apparatus according to claim 1, wherein:
the storage unit previously stores use pattern information of a user with respect to the at least one of the structure and the function of the display apparatus; and
the control selects the manual information of the first process according to the current status information and the use pattern information.

4. The display apparatus according to claim 3, wherein the use pattern information comprises at least one of the user's profile information, the user's preference for contents, and the user's contents viewing records.

5. The display apparatus according to claim 1, further comprising an interface unit which receives data from an exterior,
wherein the controller selects manual information, among the plurality of manual information, corresponding to a predetermined keyword according to the status information when a process for receiving the predetermined keyword through the interface unit is implemented.

6. The display apparatus according to claim 5, wherein:
the storage unit stores a plurality of keyword groups into which a plurality of keywords are classified according to meanings of the plurality of keywords, and a plurality of index keywords respectively corresponding to the plurality of keyword groups; and
the controller selects a keyword group, among the plurality of keyword groups, and an index keyword, among the plurality of index keywords, corresponding to a keyword received through the interface unit, and searches the manual information corresponding to the selected index keyword.

7. The display apparatus according to claim 1, wherein the manual information comprises at least one of a profile about the at least one of the structure and the function of the display apparatus, and a guide to a method of controlling a status of the display apparatus.

8. The display apparatus according to claim 1, further comprising an interface unit to communicate with a server,
wherein the controller transmits the current status information of the display apparatus to the server through the interface unit, and displays recommended setup information so that a status of the display apparatus is settable according to the recommended setup information in response to receiving, from the server, the recommended setup information corresponding to the current status information.

9. The display apparatus according to claim 1, wherein:
the storage unit stores use pattern information of a user of the display apparatus; and
the controller determines a recommended service based on the use pattern information of the user and the status information stored in the storage unit and displays, on the display unit, a user interface (UI) image for the user to select the determined recommended service, in response to receiving a request for providing the recommended service.

10. The display apparatus according to claim 9, wherein:
the storage unit stores a plurality of user profiles and a plurality of use pattern information corresponding to the plurality of user profiles; and
the controller reads use pattern information of a user profile corresponding to user ID information in response to receiving the user ID information.

11. A control method of a display apparatus, the method comprising:
implementing a process among a plurality of processes implementable in the display apparatus; and
displaying previously stored status information related to at least one of a structure and a function of the display apparatus, and manual information corresponding to the process according to a current status information of the display apparatus,
wherein the manual information is among a plurality of manual information corresponding to the plurality of processes.
